# EUROPÄISCHE PATENTSCHRIFT

(11) **EP 2 071 256 B1**
(45) Veröffentlichungstag und Bekanntmachung des Hinweises auf die Patenterteilung: **16.03.2016**
(21) Anmeldenummer: 07024320.9
(22) Anmeldetag: 14.12.2007
(51) Int. Cl.: F25B 21/00

(54) **Kühl- und/oder Gefriergerät**
Refrigerator and/or freezer device
Appareil de réfrigération et/ou de refroidissement

(43) Veröffentlichungstag der Anmeldung: 17.06.2009
(73) Patentinhaber: Liebherr-Hausgeräte Ochsenhausen GmbH, 88416 Ochsenhausen (DE)
(72) Erfinder: Jendrusch, Holger, 88416 Ochsenhausen (DE); Blersch, Dietmar, 88521 Ertingen (DE); Schmid, Eugen, 88400 Mettenberg (DE); Gindele, Thomas, 88299 Leutkirch (DE); Wiest, Matthias, 88416 Hattenburg (DE); Siegel, Didier, 88416 Steinhausen (DE)
(74) Vertreter: Herrmann, Uwe

(56) Entgegenhaltungen:
- DE-A1- 3 843 065
- US-B1- 6 293 106

## Beschreibung

Die vorliegende Erfindung betrifft ein Kühl- und/oder Gefriergerät mit einem Wärmeträgerkreislauf, in dem sich ein magnetischer Kühler sowie eine Pumpe zur Förderung eines Wärmeträgermediums durch den Wärmeträgerkreislauf befinden.

Bei der magnetischen Kühlung wird unter Nutzung des sogenannten magnetokalorischen Effektes ein durch einen Wärmeträgerkreislauf strömendes Wärmeträgermedium erwärmt und abgekühlt. Die dabei ablaufenden Prozeßschritte sind üblicherweise die Magnetisierung, der Wärmeentzug, die Entmagnetisierung und die Kältenutzung, die kontinuierlich wiederholt werden. Zur Durchführung dieser Prozeßschritte sind unterschiedliche Verfahren bekannt. Denkbar ist es beispielsweise, ein ortsfest angeordnetes magnetokalorisches Material und einen oder mehrere rotierende Magnete einzusetzen, die das magnetokalorische Material periodisch magnetisieren und entmagnetisieren, wobei dieses eine Erwärmung sowie eine Abkühlung erfährt. Die Erwärmung bzw. Abkühlung des magnetokalorischen Materials wird dazu genutzt, um das durch den magnetischen Kühler strömende Wärmeträgermedium zu erwärmen bzw. abzukühlen. Denkbar ist es auch, den oder die Magneten ortsfest und das magnetokalorische Material bewegt anzuordnen oder das magnetokalorische Material in dem Wärmeträgermedium vorzusehen.

Ein denkbarer Wärmeträgerkreislauf umfaßt einen sogenannten kalten Wärmetauscher, den genannten magnetischen Kühler, einen warmen Wärmetauscher und eine Pumpe zur Förderung des Wärmeträgermediums durch den Wärmeträgerkreislauf. Während der Magnetisierung des magnetokalorischen Materials erfährt dieses eine Erwärmung. Die Wärme wird auf das Wärmeträgermedium übertragen. Das Wärmeträgermedium wird dann mittels der Pumpe in den warmen Wärmetauscher gefördert, in dem es abgekühlt wird. Im Anschluß daran erfolgt die weitere Abkühlung des Wärmeträgermediums in dem entmagnetisierten und daher gekühlten Bereich des magnetischen Kühlers. Das auf diese Weise abgekühlte Wärmeträgermedium durchströmt sodann den kalten Wärmetauscher, der zur Kühlung des Kühl- und/oder Gefriergutes dient. Das Wärmeträgermedium erwärmt sich dabei und wird sodann erneut in dem magnetisierten Bereich des magnetischen Kühlers weiter erwärmt. Es gelangt dann schließlich wieder über die Pumpe zu dem genannten warmen Wärmetauscher.

Die Druckschrift DE 3843065 A1 offenbart ein Verfahren zur Kälteerzeugung durch einen magnetokalorischen Kreisprozess. Der in dieser Druckschrift offenbarte Kreisprozess ist auf die technische Verflüssigung tiefsiedender Gase gerichtet, wobei das zu verflüssigende Gas das Fluid selbst ist. Als Fluide kommen die Gase Helium, Wasserstoff oder Neon in Betracht. Das Fluid wird im Kreislauf zwischen einer Wärmesenke und einer Wärmequelle geführt und in Wärmekontakt mit mehreren, stufenweise angeordneten magnetischen Materialien gebracht. Dadurch kommt es zu einer stufenweisen Abkühlung. Die Verflüssigung des Fluid erfolgt, indem die in unterster Stufe abgekühlte Fluidmenge kälteleistend entspannt wird.

US 6293106 B1 offenbart ein Kühl- und der Gefriergerät gemäß dem Oberbegriff des Anspruchs 1.

Der vorliegenden Erfindung liegt die Aufgabe zugrunde, ein Kühl- und/oder Gefriergerät der eingangs genannten Art dahingehend weiterzubilden, dass dessen Energieverbrauch gegenüber bekannten Geräten verringert wird.

Diese Aufgabe wird durch ein Kühl- und/oder Gefriergerät mit den Merkmalen des Anspruchs 1 gelöst.

Danach ist vorgesehen, dass die Pumpe derart ausgeführt ist oder angesteuert wird, dass der absolute mittlere Druck im Wärmeträgerkreislauf oder der absolute Druck auf der Druckseite der Pumpe im Bereich von 1,0 bis 2,0 bar liegt.

Besonders bevorzugt ist es, wenn der absolute mittlere Druck im Wärmeträgerkreislauf oder der absolute Druck auf Druckseite der Pumpe im Bereich von 1,2 bis 1,8 bar liegt.

Weiterhin kann vorgesehen sein, dass der absolute mittlere Druck im Wärmeträgerkreislauf oder der absolute Druck auf der Pumpendruckseite im Bereich von 1,4 bis 1,6 bar liegt.

Erfindungsgemäß ist somit vorgesehen, dass der absolute Druck im Wärmeträgerkreislauf bzw. auf der Pumpendruckseite in dem genannten Druckbereich liegt. Die Leitungen und Strömungsquerschnitte der Elemente des Wärmeträgerkreislaufes, die von dem Wärmeträgermedium durchströmt werden, müssen dementsprechend ausgeführt sein, um bei den genannten Druckwerten eine ausreichende Förderung durch den Kühlkreislauf zu ermöglichen. Daraus ergibt sich ein vergleichsweise geringer Druckverlust im Kühlkreislauf bzw. eine vergleichsweise geringe Förderleistung der Pumpe und somit ein geringer Energieverbrauch der Pumpe.

Der Kühlkreislauf kann einen kalten Wärmetauscher zur Kühlung des Kühl- und/oder Gefrierraums des Gerätes sowie einen warmen Wärmetauscher zur Kühlung des Wärmeträgermediums aufweisen. Auch für diese Komponenten gilt, dass deren Strömungsquerschnitte und/oder deren Strömungsführung möglichst derart konzipiert sind, dass die oben genannten Druckwerte realisierbar sind.

Der magnetische Kühler des Kühlkreislaufes kann Einheiten oder Bereiche aufweisen, die von Wärmeträgermedium durchströmt werden und die abwechselnd magnetisiert und entmagnetisiert werden. Auch für diese Einheiten bzw. Bereiche gilt, dass deren Strömungsquerschnitte und/oder die Strömungsführung durch die Einheiten / Bereiche möglichst derart ausgestaltet sind, dass sich ein möglichst geringer Druckverlust bei der Durchströmung dieser Komponenten durch das Wärmeträgermedium ergibt.

Dieselben Vorraussetzungen gelten für ein oder mehrere schaltbare Ventile, die in dem Wärmeträgerkreislauf zur Führung des Wärmeträgermediums angeordnet sein können.

Erfindungsgemäß ist vorgesehen, dass an dem Wärmeträgerkreislauf bzw. dessen Komponenten ein oder mehrere Drucksensoren angeord-net sind, die den mittleren Druck im Kühlkreislauf und/oder den Druck an der Druckseite der Pumpe erfassen und dass eine Regelungseinheit vorgesehen ist, die mit dem oder den Drucksensoren sowie mit der Pumpe in Verbindung steht und die die Pumpe derart betreibt, dass der mittlere Druck im Wärmeträgerkreislauf oder der Druck an der Pumpendruckseite in dem genannten Bereich liegt oder einen Grenzwert nicht überschreitet oder einnimmt, der in den genannten Bereich liegt. Denkbar ist beispielsweise, dass der Druck an mehreren Positionen im Wärmeträgerkreislauf ermittelt und daraus ein mittlerer Druckwert bestimmt wird, der mit einem Sollwert oder einem Sollwetbereich verglichen wird. Ebenfalls ist denk bar, nur den Druck auf der Pumpendruckseite zu erfassen und die Pumpe derart zu regeln, dass dieser Druckwert einem Sollwert entspricht oder in einem Sollwertbereich liegt.

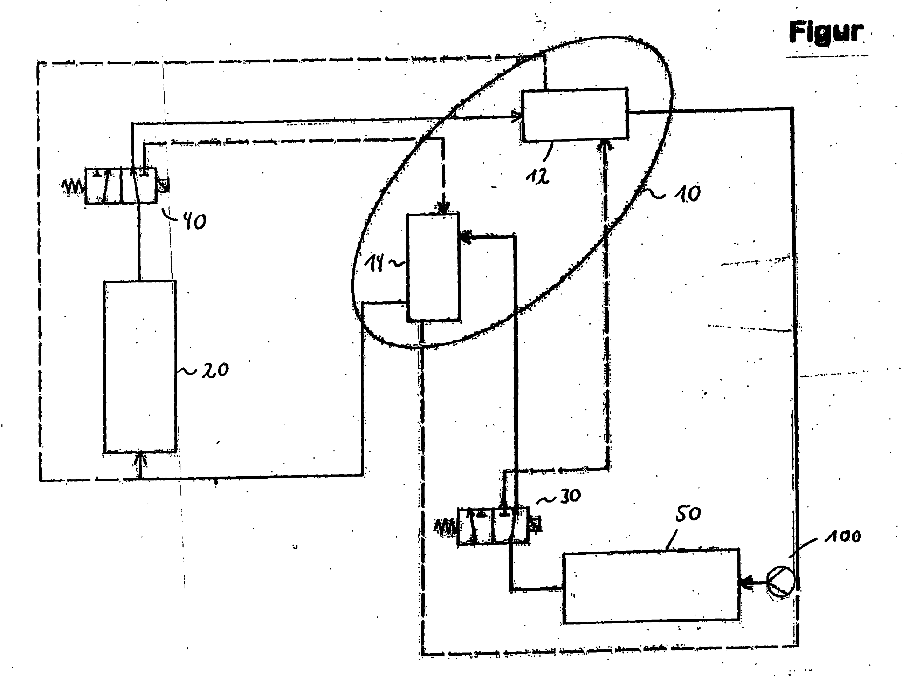

Weitere Einzelheiten und Vorteile der Erfindung werden anhand eines in der Zeichnung dargestellten Ausführungsbeispiels dargestellt.

Mit dem Bezugszeichen 10 ist der magnetische Kühler gekennzeichnet, der zwei Wärmetauschereinheiten 12, 14 umfaßt, die als bauliche Einheit oder auch voneinander getrennt ausgeführt sein können.

Die Wärmetauschereinheiten 12, 14 bestehen aus einem magnetokalorischen Material oder weisen ein solches Material auf.

Sie werden zyklisch magnetisiert und entmagnetisiert, wozu ein nicht dargestellter, um die Wärmetauschereinheiten 12, 14 rotierender Magnet vorgesehen ist. Je nach Position des Magneten werden die Wärmetauschereinheiten 12, 14 magnetisiert oder entmagnetisiert, was deren Erwärmung oder Abkühlung und somit auch die Erwärmung oder Abkühlung des Wärmeträgermediums zur Folge hat, das durch die Wärmetauschereinheiten 12, 14 hindurchströmt.

Der Wärmeträgerkreislauf des Kühl- und oder Gefriergerätes weist des Weiteren einen kalten Wärmetauscher 20 auf, der im Kühl- bzw. Gefrierraum oder im Bereich des Kühl- bzw. Gefrierraumes des Gerätes angeordnet ist und für dessen Kühlung sorgt. Ein warmer vorzugsweise luftgekühlter Wärmetauscher 50 ist auf der Außenseite des Gerätes angeordnet und dient zur Wärmeabfuhr aus dem Wärmeträgermedium in die Umgebung.

Die Pumpe 100 sorgt für die Durchströmung des dargestellten Wärmeträgerkreislaufes mit dem Wärmeträgermedium.

Stromabwärts des kalten Wärmetauschers 20 ist ein Ventil 40 angeordnet und stromabwärts des warmen Wärmetauschers 50 ist ein weiteres Ventil 30 angeordnet. Bei den Ventilen handelt es sich beispielsweise um bistabile oder monostabile Ventile. Die Ventile 30, 40 werden während des Kühlbetriebs derart angesteuert, daß das Wärmeträgermedium von dem warmen Wärmetauscher 50 stets in die Wärmetauchereinheit 12, 14 gelangt, die gerade gekühlt bzw. entmagnetisiert ist und von dort aus in den kalten Wärmetauscher 20. Das Ventil 40 wird derart angesteuert, daß das Wärmeträgermedium, das den kalten Wärmetauscher 20 durchströmt hat, der Wärmetauschereinheit 12/14 zugeführt wird, die sich magnetisierten Zustand befindet und daher erwärmt ist.

In dem hier dargestellten Ausführungsbeispiel ist vorgesehen, dass die Pumpe 100 derart betrieben wird, dass auf der Pumpendruckseite, d. h. auf der druckseitigen Auslaßseite der Pumpe ein Absolutdruck im Bereich von 1,2 bis 1,8 bar besteht, was in anderen Worten bedeutet, dass die Komponenten des Wärmeträgerkreislaufes derart ausgeführt sind, dass dieser Druckwert ausreicht, um die Durchströmung des gesamten Wärmeträgerkreislaufes zu ermöglichen.

Die oben genannten Komponenten des Wärmeträgerkreislaufes sind in diesem Ausführungsbeispiel der Erfindung somit derart ausgeführt, dass sie der Strömung des Wärmeträgermediums einen derart geringen Widerstand entgegensetzen, dass eine Durchströmung des Kühlkreislaufes bei den angegebenen Druckwerten möglich ist. Die Leitungen und Strömungsquerschnitte beispielsweise der Wärmetauscher, des magnetischen Kühlers sowie der Ventile werden dementsprechend konzipiert.

Durch den geringen Druckverlust im System ist ein niedriger Energieverbrauch erzielbar.

Um sicherzustellen, dass die Pumpe Druckwerte in dem angegebenen Bereich liefert, kann vorgesehen sein, dass ein oder mehrere Drucksensoren angeordnet sind, die beispielsweise an verschiedenen Stellen des Wärmeträgerkreislaufes den Druck erfassen oder die beispielsweise den Druck auf der Pumpendruckseite erfassen. Diese Druckwerte werden einer nicht dargestellten Regelungseinheit zugeführt, die mit der Pumpe in Verbindung steht und diese derart ansteuert, dass der gewünschte Druckwert erhalten wird bzw. dass ein Druckwert in einem vorgegebenen Sollwertbereich erhalten wird.

## Patentansprüche

1. Kühl- und/oder Gefriergerät mit einem Wärmeträgerkreislauf, der einen magnetischen Kühler (10), Leitungen sowie eine Pumpe (100) zur Förderung eines Wärmeträgermediums durch den Wärmeträgerkreislauf umfasst, **dadurch gekennzeichnet, dass** für eine ausreichende Förderung des Wärmeträgermediums die Pumpe (100), die Leitungen und die Strömungsquerschnitte der Elemente des Wärmeträgerkreislaufs derart ausgeführt sind und die Pumpe (100) derart angesteuert wird, dass der absolute mittlere Druck im Wärmeträgerkreislauf oder der absolute Druck auf der Druckseite der Pumpe (100) im Bereich von 1,0 bis 2,0 bar liegensoll, wobei ein oder mehrere Drucksensoren vorgesehen sind, die den absoluten mittleren Druck im Wärmeträgerkreislauf und/oder den absoluten Druck an der Druckseite der Pumpe (100) erfassen, und dass eine Regelungseinheit vorgesehen ist, die mit dem oder den Drucksensoren sowie mit der Pumpe (100) in Verbindung steht und die die Pumpe (100) derart ansteuert, dass der absolute mittlere Druck im Wärmeträgerkreislauf oder der absolute Druck an der Druckseite der Pumpe (100) in dem vorgegebenen Bereich liegt und einem Sollwert entspricht.

2. Kühl- und/oder Gefriergerät nach Anspruch 1, **dadurch gekennzeichnet, dass** der absolute mittlere Druck im Wärmeträgerkreislauf oder der absolute Druck auf der Druckseite der Pumpe (100) im Bereich von 1,2 bis 1,8 bar liegt.

3. Kühl- und/oder Gefriergerät nach Anspruch 1 oder 2, **dadurch gekennzeichnet, dass** der absolute mittlere Druck im Wärmeträgerkreislauf oder der absolute Druck auf der Druckseite der Pumpe (100) im Bereich von 1,4 bis 1,6 bar liegt.

4. Kühl- und/oder Gefriergerät nach einem der vorhergehenden Ansprüche, **dadurch gekennzeichnet, dass** der Wärmeträgerkreislauf einen kalten Wärmetauscher (20) zur Kühlung des Kühl- und/oder Gefrierraums des Gerätes sowie einen warmen Wärmetauscher (50) zur Kühlung des Wärmeträgermediums aufweist.

5. Kühl- und/oder Gefriergerät nach einem der vorhergehenden Ansprüche, **dadurch gekennzeichnet, dass** der magnetische Kühler (10) im Betrieb von dem Wärmeträgermedium durchströmte Einheiten (12, 14) oder Bereiche sowie einen Magneten aufweist, der die Bereiche oder Einheiten (12, 14) magnetisiert und entmagnetisiert.

6. Kühl- und/oder Gefriergerät nach einem der vorhergehenden Ansprüche, **dadurch gekennzeichnet, dass** der Wärmeträgerkreislauf ein oder mehrere schaltbare Ventile (30,40) zur Führung des Wärmeträgermediums aufweist.

## Claims

1. A refrigerator unit and/or a freezer unit having a heat carrier circuit which comprises a magnetic radiator (10), lines and a pump (100) for conveying a heat carrier medium through the heat carrier circuit, **characterised in that**, for a sufficient conveying of the heat carrier medium, the pump (100), the lines and the flow cross-sections of the elements of the heat carrier circuit are configured and the pump (100) is controlled such that the absolute mean pressure in the heat carrier circuit or the absolute pressure on the pressure side of the pump (100) should lie in the range from 1.0 to 2.0 bar, wherein one or more pressure sensors are provided which detect the absolute mean pressure in the heat carrier circuit and/or the absolute pressure at the pressure side of the pump (100); and **in that** a regulation unit is provided which is connected to the pressure sensor or sensors and to the pump (100) and which controls the pump (100) such that the absolute mean pressure in the heat carrier circuit or the absolute pressure at the pressure side of the pump (100) lies in the predefined range and corresponds to a desired value.

2. A refrigerator unit and/or a freezer unit in accordance with claim 1, **characterised in that** the absolute mean pressure in the heat carrier circuit or the absolute pressure at the pressure side of the pump (100) lies in the range from 1.2 to 1.8 bar.

3. A refrigerator unit and/or a freezer unit in accordance with claim 1 or claim 2, **characterised in that** the absolute mean pressure in the heat carrier circuit or the absolute pressure at the pressure side of the pump (100) lies in the range from 1.4 to 1.6 bar.

4. A refrigerator unit and/or a freezer unit in accordance with one of the preceding claims, **characterised in that** the heat carrier circuit has a cold heat exchanger (20) for cooling the refrigeration and/or freezing space of the unit as well as a hot heat exchanger (50) for cooling the heat carrier medium.

5. A refrigerator unit and/or a freezer unit in accordance with one of the preceding claims, **characterised in that** the magnetic radiator (10) has units (12, 14) or regions flowed through by the heat carrier medium in operation and has a magnet which magnetises and demagnetises the regions or units (12,14).

6. A refrigerator unit and/or a freezer unit in accordance with one of the preceding claims, **characterised in that** the heat carrier circuit has one or more switchable valves (30, 40) for conducting the heat carrier medium.

## Revendications

1. Appareil de réfrigération et/ou de refroidissement comprenant un circuit d'agent caloporteur, qui comprend un réfrigérant magnétique (10), des conduites ainsi qu'une pompe (100) destinées au refoulement d'un fluide caloporteur à travers le circuit d'agent caloporteur,
**caractérisé en ce que**, pour un refoulement suffisant du fluide caloporteur, la pompe (100), les conduites et les sections d'écoulement des éléments du circuit d'agent caloporteur sont réalisées de telle manière et la pompe (100) est commandée de telle manière que la pression moyenne absolue dans le circuit d'agent caloporteur ou la pression absolue du côté refoulement de la pompe (100) doit se situer dans la plage de 1,0 à 2,0 bar, un ou plusieurs capteurs de pression étant prévus, qui détectent la pression moyenne absolue dans le circuit d'agent caloporteur et/ou la pression absolue du côté refoulement de la pompe (100), et **en ce qu'**une unité de régulation est prévue, qui est en liaison avec le ou les capteurs de pression ainsi qu'avec la pompe (100) et qui commande la pompe (100) de telle manière que la pression moyenne absolue dans le circuit d'agent caloporteur ou la pression absolue du côté refoulement de la pompe (100) se situe dans la plage prédéfinie et correspond à une valeur de consigne.

2. Appareil de réfrigération et/ou de refroidissement selon la revendication 1, **caractérisé en ce que** la pression moyenne absolue dans le circuit d'agent caloporteur ou la pression absolue du côté refoulement de la pompe (100) se situe dans la plage de 1,2 à 1,8 bar.

3. Appareil de réfrigération et/ou de refroidissement selon la revendication 1 ou 2, **caractérisé en ce que** la pression moyenne absolue dans le circuit d'agent caloporteur ou la pression absolue du côté refoulement de la pompe (100) se situe dans la plage de 1,4 à 1,6 bar.

4. Appareil de réfrigération et/ou de refroidissement selon l'une des revendications précédentes, **caractérisé en ce que** le circuit d'agent caloporteur comporte un échangeur de chaleur froid (20) destiné au refroidissement du compartiment de réfrigération et/ou de congélation de l'appareil ainsi qu'un échangeur de chaleur chaud (50) destiné au refroidissement du fluide caloporteur.

5. Appareil de réfrigération et/ou de refroidissement selon l'une des revendications précédentes, **caractérisé en ce que** le réfrigérant magnétique (10) comporte des unités (12, 14) ou zones qui, en fonctionnement, sont traversées par le fluide caloporteur ainsi qu'un aimant, qui magnétise et démagnétise les zones ou unités (12, 14).

6. Appareil de réfrigération et/ou de refroidissement selon l'une des revendications précédentes, **caractérisé en ce que** le circuit d'agent caloporteur comporte une ou plusieurs vannes (30, 40) commutables destinées à guider le fluide caloporteur.
